# EUROPÄISCHE PATENTSCHRIFT

(11) **EP 3 493 969 B1**
(45) Veröffentlichungstag und Bekanntmachung des Hinweises auf die Patenterteilung: **19.08.2020**
(21) Anmeldenummer: 17791539.4
(22) Anmeldetag: 19.10.2017
(51) Int. Cl.: B29B 7/48, B29C 48/67, B29K 27/06, B29C 48/02, B29C 48/03, B29C 48/36, B29C 48/40, B29C 48/42

(54) **MISCHVORRICHTUNG IM SCHNECKENVORRAUM EINES DOPPELSCHNECKENEXTRUDERS SOWIE DEREN VERWENDUNG**
MIXING DEVICE IN THE SCREW ANTECHAMBER OF A TWIN-SCREW EXTRUDER, AND ITS USE
DISPOSITIF DE MÉLANGE DANS L'ANTICHAMBRE DE VIS SANS FIN D'UNE EXTRUDEUSE BI-VIS, ET SON UTILISATION

(30) Priorität: 19.10.2016 AT 509452016
(43) Veröffentlichungstag der Anmeldung: 12.06.2019
(73) Patentinhaber: Gruber, Dietmar, 4553 Schlierbach (AT)
(72) Erfinder: Gruber, Dietmar, 4553 Schlierbach (AT)
(74) Vertreter: Babeluk, Michael
(86) Internationale Anmeldenummer: PCT/AT2017/060271
(87) Internationale Veröffentlichungsnummer: WO 2018/071939

(56) Entgegenhaltungen:
- EP-A2- 0 346 757
- EP-A2- 1 543 930
- DE-A1- 2 147 404
- DE-A1-102009 058 507
- DE-C1- 3 723 456
- DE-U1-202013 100 631
- GB-A- 1 389 449
- JP-A- S53 111 362
- US-A- 1 389 449
- US-A- 2 615 199
- US-A- 3 744 770
- US-A1- 2005 111 294
- US-A1- 2005 219 943

## Beschreibung

Die Erfindung betrifft eine Mischvorrichtung gemäß dem Oberbegriff von Patentanspruch 1.

Doppelschneckenextruder werden sowohl mit gleichsinnig drehenden Schnecken als auch mit gegensinnig drehenden Schnecken ausgeführt. Die Außenkontur der Schnecken ist entweder zylindrisch oder verjüngt sich konisch in Förderrichtung. Die Schnecken sind nebeneinander angeordnet, wobei die Schneckenstege der einen Schnecke mehr oder weniger tief in die Schneckengänge der anderen Schnecke hineinreichen. Der umgebende Zylinder weist für jede Schnecke eine zylindrisch oder konisch verlaufende Längsbohrung auf, wobei sich diese Bohrungen im Zwickelbereich überschneiden. Im Betrieb wird von jeder Schnecke ein Schmelzestrom ausgestoßen, wobei sich die beiden Schmelzeströme im Schneckenvorraum zu einem Gesamtschmelzestrom vereinigen, der üblicherweise einen runden Querschnitt aufweist. Über diesen Querschnitt sind die Eigenschaften der Schmelze nicht homogen bzw. identisch gleich, insbesondere können Temperaturunterschiede festgestellt werden. Die Temperaturen weisen ein charakteristisches Profil auf, welches die Vorgeschichte der Schmelze widerspiegelt. Der Verlauf von Isothermen lässt sehr gut erkennen, dass die Schmelze von zwei nebeneinander liegenden Schnecken aufbereitet worden ist. Die Bandbreite der Temperaturen ist bei gegensinnig drehenden Schnecken deutlich größer als bei gleichsinnig drehenden Schnecken.

Gegensinnig drehende, dicht kämmende Doppelschneckenextruder (kurz DSE) werden sehr häufig für die Extrusion von PVC-hart eingesetzt. Der Rohstoff wird in der Regel beim Verarbeiter nach einer bestimmten Rezeptur aus mehreren Komponenten (PVC, Stabilisator, Gleitmittel, Calciumcarbonat, Titanoxid u.a.) in pulverförmigem Zustand in einem Heiz-Kühlmischer gemischt und wird als Dryblend (Trockenmischung) dem Extruder zugeführt. Der gegensinnig drehende Doppelschneckenextruder weist speziell für die Verarbeitung des hitzeempfindlichen PVC in Form von Dryblend einige wesentliche Vorteile im Vergleich zu gleichsinnig drehenden DSE oder Einschneckenextrudern auf: Zwangsförderung, Selbstreinigung, geringe Schergeschwindigkeit und guter Druckaufbau.

Diesen Vorteilen steht vor allem ein markanter Nachteil entgegen, nämlich eine deutlich inhomogene Temperaturverteilung der Schmelze nach dem Verlassen der Schnecken. Der Hauptgrund hierfür ist, dass die Schmelze in den C-förmigen Kammern in der Ausstoßzone des Extruders an den Begrenzungsflächen mit relativ niedrigen Temperaturen im Vergleich zur Massetemperatur beaufschlagt wird. Typische Temperaturen sind: Massetemperatur 190°C, Schneckentemperatur 120°C und Zylindertemperatur in der Ausstoßzone 160°C.

Die Schmelze in den Kammern weist somit systematische, deutlich unterschiedliche Temperaturen auf, an den Begrenzungsflächen niedriger als im Inneren.

Bei jeder Umdrehung der Schnecken werden abwechselnd entsprechend der Gangzahl der beiden Schnecken C-förmige Schmelze-Portionen in den Schneckenvorraum gedrückt, jeweils einmal von der ersten Schnecke und einmal von der zweiten Schnecke. Im Schneckenvorraum und im anschließenden, runden Fließkanal im Adapter bis zur nachgeschalteten Düse bildet sich ein charakteristisches Temperaturprofil aus. Gerade im oberen Leistungsbereich des Extruders, der im Zuge einer kostensparenden Extrusion in der Praxis vorliegt, betragen die Temperaturunterschiede 20 K und mehr. Die Verweilzeit im Fließkanal bis zum Düseneinlauf reicht keinesfalls aus, dass sich die Temperaturunterschiede infolge Wärmeleitung ausgleichen können, da die Entfernungen im Fließkanal zwischen den Bereichen mit Temperaturmaxima und -minima etwa 20 mm bis 60 mm betragen, je nach Nenndurchmesser des Extruders, und weil Kunststoffe und somit auch PVC bekannterweise schlechte Wärmeleiter sind.

Dieses Temperaturprofil ist um die vertikale Symmetrieebene symmetrisch. Der Grund hierfür ist verständlich: Der gegensinnig drehende Doppelschneckenextruder ist sowohl von der Geometrie der Schnecken, des Zylinders und sogar der Drehrichtung der Schnecken exakt symmetrisch aufgebaut. Daher sind auch die Schmelzeströme, welche von jeder Schnecke ausgestoßen werden, genau spiegelbildlich aufgebaut. Lediglich Fertigungsungenauigkeiten bei der mechanischen Fertigung der Verfahrenseinheit, ungleicher Verschleiß nach längerer Einsatzdauer sowie zufällige Abweichungen von den eingestellten Temperaturen für die Temperierung der Schnecken und des Zylinders mildern etwas die strenge Symmetrie des Temperaturfeldes. Das Temperaturfeld ist typisch für einen bestimmten Extruder in einem bestimmten Durchsatzbereich und bei einem bestimmten Druckaufbau. D.h. auch, dass für jeden Einsatzfall signifikant abweichende Temperaturverteilungen auftreten können, welche bis jetzt nicht mit ausreichender Genauigkeit vorhersagbar sind und die deutliche Wechselwirkungen mit der jeweiligen Extrusionsaufgabe - Profilform und Düsenwiderstand, Durchsatz, Druck an der Schneckenspitze - aufweisen.

Die Temperaturunterschiede in der Schmelze haben auch eine entscheidende Auswirkung auf die Fließeigenschaften der Schmelze in der Düse, sehr deutlich ausgeprägt bei Düsen für die Herstellung von vergleichsweise komplizierten Fensterprofilen, bei welche nur geringe Maß-Toleranzen zulässig sind. Im Düseneinlaufbereich wird der Schmelzestrom auf unterschiedliche Pfade aufgeteilt. Jeder Pfad reicht bis zum Düsenende und weist eine bestimmte Geometrie (Breite, Höhe u.a.) auf. Einzelne Pfade können bereichsweise durch Speichen gänzlich von den anderen Pfaden getrennt sein, andere Pfade gehen ineinander über, ohne exakt begrenzt zu sein. Es ist leicht einsehbar, dass Schmelzebereiche mit eher niedriger Massetemperatur langsamer strömen als solche mit höherer Massetemperatur, wenn ein identisch gleicher Fließkanal durchströmt wird. Bei Düsen für Fensterprofile führt in der Praxis die niedrigere Massetemperatur zu einer kleineren Wanddicke des Profilsegmentes als die höhere Massetemperatur, wenn an unterschiedlichen Stellen der Düse der gleiche Spaltverlauf für den Fließkanal vorgesehen wird.

Es sind statische Mischelemente, welche im Fließkanal der Schmelze vor der Düse angeordnet werden, bekannt, siehe z.B. nach AT 408 860 und AT 506 577. Diese Mischelemente bewirken eine großräumige Umordnung von jeweils sechs Teil-Schmelzeströmen. Dadurch kommen Bereiche mit ursprünglich höheren Massetemperaturen neben solchen mit ursprünglich niedrigeren Massetemperaturen nebeneinander zu liegen, so dass sich infolge Wärmeleitung und vergleichsweise kurzer Entfernungen Temperaturunterschiede signifikant ausgleichen können. Obwohl jedes dieser Mischelemente mit geringem Aufwand zu einer Verringerung der Temperaturunterschiede auf unter 50% führt, ist der Druckbedarf für das einmalige Durchströmen des Mischelementes mit etwa 30 bar störend, so dass kaum mehr als zwei Mischelemente hintereinander geschaltet werden können.

Die DE 37 23 456 C1 und die EP 1 543 930 A2 zeigt einen Doppelschneckenextruder, wobei beide Schnecken ineinandergreifende Spitzen aufweisen, die eine Vermischung des geförderten Materials ermöglichen. Sie führen in eine Mischvorrichtung mit einem einheitlich geformten Schmelzkanal, in dem das von beiden Schnecken geförderte Material eingebracht wird. Nachteilig ist dabei, dass die die Vermischung nur durch die kurz ausgeführten Spitzen der Schnecken erreicht wird. Dies führt zu einer nicht ausreichenden Vermischung und gleichmäßigen Temperaturverteilung im Schmelzestrom.

Aus der EP 346 757 A ist ein Doppelschneckenextruder bekannt, der an beiden Schnecken stromabwärtig Zellrotoren aufweist, um die Schmelze zu durchmischen. Es bleiben jedoch nach wie vor störende Temperaturunterschiede bestehen.

Ergänzend wird noch auf die Offenbarungen der Druckschriften DE 10 2009 058507 A1, DE 21 47 404 A1 und US 2005/219943 A1 hingewiesen.

Aufgabe der Erfindung ist es diese Nachteile zu vermeiden und einen Doppelschneckenextruder anzugeben, der eine gleichmäßigere Temperaturverteilung im Schmelzestrom erreicht.

Erfindungsgemäß wird das durch die Merkmale von Patentanspruch 1 gelöst. Insbesondere wird im Anschluss an die Schnecken bzw. den Zylinder eines Doppelschneckenextruders eine Mischvorrichtung vorgesehen. Die erste Schnecke weist eine Verlängerung in Form eines Mischelementes auf, wobei dieses Mischelement mit der ersten Schnecke fest verbunden ist, und dieses Mischelement ein Aufwickeln des von der zweiten Schnecke ausgestoßenen Schmelzestromes auf jenen von der ersten Schnecke ausgestoßenen bewirkt. Dazu sind die Schneckenvorräume als Schmelzekanäle ausgebildet.

Die beschriebene Mischvorrichtung bewirkt eine Homogenisierung der Schmelze im Schneckenvorraum eines Doppelschneckenextruders, unmittelbar nachdem diese von den beiden Schnecken ausgestoßen worden ist. Diese Mischvorrichtung ist für alle gängigen Doppelschneckenextruder geeignet, also sowohl für parallele DSE als auch für konische DSE, für gegensinnig als auch für gleichsinnig drehende. Insbesondere bei gegensinnig drehenden DSE, welche zu großen Temperaturunterschieden im Schmelzestrom im Bereich von 20 K führen, ist diese Mischvorrichtung vorteilhaft einsetzbar.

Diese Mischvorrichtung führt zu einer Auflösung der strengen Symmetrie bezüglich der Temperaturverteilung im Schmelzestrom nach Verlassen des Extruders und verringert erheblich die Bandbreite der Temperaturwerte. Eine Schnecke wird durch ein mitrotierendes Mischelement verlängert. Dieses Mischelement, im folgenden Misch-Schneckenspitze genannt, kann entweder direkt an die Schnecke angeformt sein oder es wird extra gefertigt und dann mechanisch starr mit der Schnecke verbunden. Der Schmelzestrom aus dieser Schnecke bleibt überwiegend im Zentrum der Misch-Schneckenspitze und des nachfolgenden Fließkanals angeordnet, hingegen wird der Schmelzestrom aus der anderen Schnecke von der Seite schräg zum Schmelzestrom aus der ersten Schnecke zugeführt und wird sozusagen in mehreren dünnen Schichten auf die erstere Schmelze aufgewickelt. In den Schichten kommen statistisch verteilt Bereiche mit ursprünglich großen Temperaturunterschieden nebeneinander zu liegen, so dass sich diese über kurze Entfernungen sehr gut ausgleichen können. Im Endeffekt sind jene 50% des Fließquerschnittes, die ringförmig außen im Fließkanal strömen, gut gemischt und weisen ein annähernd homogenes Temperaturfeld auf. Auch die innenliegenden 50% des Fließquerschnittes erfahren eine gewisse Mischwirkung, weil die Strömung im mit der Schnecke mitrotierenden Mischelement nicht streng nur in Kanalrichtung des Schneckenganges erfolgt, sondern vor allem durch den Kontakt mit der seitlich zugeführten Schmelze auch zu einer wendelförmigen Strömung angeregt wird. Nach dem Auslaufen der mitrotierenden Flügel bzw. Schneckengänge des Mischelementes und dem Abstoppen des Rotierens der Schmelze erfolgt auch in diesem innen liegendem Querschnittsbereich ein gewisser Temperaturausgleich.

Eine einheitliche Massetemperatur im Eintrittsbereich der Düse erlaubt eine wesentlich genauere Auslegung der Düse, weil die Schmelze dann einheitliche rheologische Eigenschaften aufweist. Diese einheitlichen rheologischen Eigenschaften können durch eine mathematische Formel beschrieben werden, so dass der Fließkanal mittels gängiger Rechenmethoden, auch mittels FEM-Berechnung, ausgelegt werden kann. Der Fließkanal wird dann so dimensioniert, dass am Ende der Düse bereichsweise jener Massestrom austritt, welcher zu den gewünschten Wanddicken des Profils führt. Überdies werden auch wellige Kanten, welche auf Temperaturschwankungen in Axialrichtung zurückzuführen sind, weitgehend vermieden. Der Aufwand für das Abstimmen der Düse wird deutlich verringert, weil die Wanddicken des Profils nur mehr von der Geometrie des Fließkanals abhängen und nicht durch örtlich unterschiedliche Massetemperaturen verfälscht werden.

Das bedeutet auch, dass eine Düse mit unterschiedlichen Extrudern betrieben werden kann, ohne dass signifikante Auswirkungen auf die Geometrie des Profils zu befürchten sind. Die Temperaturverteilung im Schmelzestrom, welche für jeden Doppelschneckenextruder und jeden Einsatzfall charakteristisch ist, verliert den Einfluss auf die Geometrie des Profils. Nachdem das Temperaturprofil auf die mittlere Massetemperatur eingeebnet worden ist, ist es unwichtig, welche Temperaturunterschiede ursprünglich vorgelegen sind.

Erfindungsgemäß ist vorgesehen, dass ein erster Schneckenvorraum im Wesentlichen eine zylindrische Form aufweist, und dass ein zweiter Schneckenvorraum im Wesentlichen eine schiefkegelige Form aufweist. Dadurch entsteht der Vorteil, dass eine zweite Schmelze aus dem zweiten Schneckenvorraum allmählich um eine erste Schmelze aus dem ersten Schneckenvorraum gewickelt wird.

Zur besseren thermischen Durchmischung kommt es insbesondere dadurch, dass die Misch-Schneckenspitze zumindest einen Flügel aufweist - vorzugsweise zwei bis fünf Flügel aufweist - der/die im Wesentlichen in Achsrichtung oder schraubenförmig an einem Spitzenkern der Misch-Schneckenspitze angeordnet ist/sind. Zum Charakterisieren der Größenordnung der Ganghöhe derartiger schraubenförmiger Schneckenstege der Misch-Schneckenspitze und einiger anderer Geometrien werden zwei typische Kennzahlen des DSE herangezogen: Der Nenndurchmesser kennzeichnet den Außendurchmesser der Schnecken am Schneckenende. Der Kerndurchmesser ist der Durchmesser des Schneckenkerns am Schneckenende.

Besonders wirksam stellt sich dieser Mischeffekt erfindungsgemäß ein, wenn eine Ganghöhe derartiger Schneckenstege größer ist als der Nenndurchmesser der Extruderschnecken am Schneckenende, vorzugsweise ist die Steigung doppelt bis fünfmal so groß wie der Nenndurchmesser, besonders bevorzugt ist die Steigung viermal so groß wie der Nenndurchmesser.

Erfindungsgemäß ist auch vorgesehen, dass sich die Misch-Schneckenspitze über eine Länge in Richtung einer Längsachse erstreckt, die gleich oder größer ist als der Nenndurchmesser, vorzugsweise ist die Länge einmal bis zehnmal der Nenndurchmesser, besonders bevorzugt ist die Länge zweimal bis fünfmal der Nenndurchmesser. Dadurch entsteht der Vorteil, dass für die Vermischung eine ausreichende Länge zur Verfügung steht, so dass es zum vollständigen Ausgleich der Temperaturunterschiede in der Schmelze kommen kann.

Um für die Mischung genug Volumen bereitzustellen, ist es günstig, wenn die Misch-Schneckenspitze einen Spitzenkern aufweist, der einen gemeinsamen Kerndurchmesser mit der ersten Schnecke im Bereich der ersten Schneckenspitze aufweist, wobei sich der Spitzenkern in Förderrichtung kegelig zu einer Spitze verjüngt.

Noch besser ist es, wenn die Misch-Schneckenspitze einen Spitzenkern aufweist, dessen einlaufseitiger Kerndurchmesser mit dem Kerndurchmseer der ersten Schneckenspitze korrespondiert, wobei sich der Spitzenkern in Förderrichtung zuerst kegelförmig erweitert zu einer Verdickung und dann kegelig zu einer Spitze verjüngt. Dabei entsteht der Vorteil, dass durch die Verdickung eine Engstelle entsteht, durch die der Fließwiderstand für den ersten Schmelzestrom erhöht wird und ein Teil des ersten Schmelzestromes in den annähernd schiefkegeligen Hohlraum zum zweiten Schmelzestrom hin verdrängt wird.

Um beim Austritt der Schmelze aus dem Adapter, hier Mischadapter, des Doppelschneckenextruders einen nur in Förderrichtung bewegten Schmelzestrang zu erreichen, ist es günstig, wenn in Förderrichtung nach der Misch-Schneckenspitze ein statisches Mischelement z.B. nach AT 408 860 oder AT 506 577 angeordnet ist, um die durch die Misch-Schneckenspitze erzwungene Rotation der Schmelzen zu stoppen.

In der Folge wird die Erfindung anhand der nicht einschränkenden Figuren näher beschrieben. Es zeigen:
- Fig. 1: eine erfindungsgemäße Mischvorrichtung für einen parallelen Doppelschneckenextruder in einer ersten Ausführung in einer Schrägansicht im Halbschnitt;
- Fig. 2: die Mischvorrichtung der ersten Ausführung in einer Draufsicht;
- Fig. 3: eine Misch-Schneckenspitze einer erfindungsgemäßen Mischvorrichtung in einer ersten Ausführung in einer Draufsicht;
- Fig. 4: eine Misch-Schneckenspitze in einer zweiten Ausführung entsprechend Fig. 1 in der Draufsicht;
- Fig. 5: ein Misch-Adapter in einer Schrägansicht im Halbschnitt;
- Fig. 6: ein Mischelement der Mischvorrichtung nach Patent AT 506 577 in einer Schrägansicht.

Die Begriffe "einlaufseitig" und "auslaufseitig" beziehen sich auf eine Förderrichtung A.

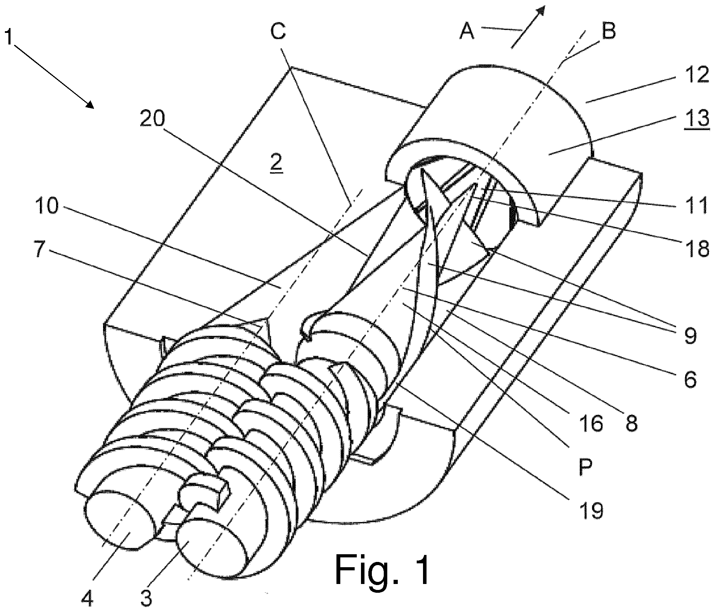

Die Fig. 1 zeigt eine Schrägansicht einer Mischvorrichtung 1. Ein Misch-Adapter 2 wird im Halbschnitt dargestellt. Dieser wird anstelle des normalen Adapters eines Doppelschneckenextruders verwendet, der etwa um 1 bis 10 Nenndurchmesser verlängert wird. Einlaufseitig sind eine erste Schnecke 3 und eine zweite Schnecke 4 dargestellt, hier für einen sogenannten parallelen Doppelschneckenextruder mit gegensinnig drehenden Schnecken 3, 4. Diese Schnecken sind Teil einer Mischvorrichtung 1 eines Doppelschneckenextruders, wobei letzterer in den Figuren nicht dargestellt ist. Zu sehen ist lediglich der auslaufseitige Teil der beiden Schnecken. Anstelle einer erste Schneckenspitze 5, welche in den Figuren nicht dargestellt wird, der ersten Schnecke 3 ist eine Misch-Schneckenspitze 6 vorgesehen, welche mit der ersten Schnecke 3 mitrotiert. Eine zweite Schneckenspitze 7 der zweiten Schnecke 4 ist unverändert.

Die Misch-Schneckenspitze 6 wird von einem zylindrischen ersten Schneckenvorraum 8 aufgenommen.

Eine nicht gezeigte erste Schmelze, ausgestoßen von der ersten Schnecke 3, wird im Wesentlichen in diesen zylindrischen ersten Schneckenvorraum 8 ausgestoßen und würde ohne Misch-Schneckenspitze 6 vorwiegend in axialer Richtung der Längsachse B fließen. Die rotierende Misch-Schneckenspitze 6 mit angesetzten Schneckenstegen 9 bzw. Flügeln bewirkt eine zusätzliche Rotation der Schmelze um die Längsachse B, welche die Längsströmung überlagert.

Eine nicht gezeigte zweite Schmelze der zweiten Schnecke 4 wird in einen annähernd schiefkegeligen zweiten Schneckenvorraum 10 ausgestoßen. Mit kleiner werdendem Querschnitt dieses zweiten Schneckenvorraumes 10 wird die Schmelze in Richtung des zylindrischen ersten Schneckenvorraumes 8 der ersten Schnecke 3 verdrängt und sozusagen außen auf den rotierenden Schmelzestrom der ersten Schnecke 3 aufgewickelt. Ein Gesamtschmelzestrom am Ende 11 der Misch-Schneckenspitze 6 besteht somit aus einem etwas weniger gemischten inneren Bereich und aus mehreren aufgewickelten, dünnen Schichten im Außenbereich. Temperaturunterschiede in benachbarten Schichten werden infolge Wärmeleitung und über kurze Entfernungen in kurzer Zeit ausgeglichen, so dass an einem Austritt 12 der Mischvorrichtung 1 eine weitgehend einheitliche Temperatur im Außenbereich des Schmelzestromes vorliegt.

Im Anschluss an die Misch-Schneckenspitze 6 kann noch ein statisches Mischelement 13 vorgesehen werden, welches ebenfalls in Fig. 1 dargestellt ist. Dieses Mischelement 13 bewirkt einen zusätzlichen Mischeffekt, welcher vor allem für den innenliegenden Bereich des Gesamtschmelzestromes erwünscht ist.

Außerdem wird dadurch die von der Misch-Schneckenspitze 6 erzwungene Rotation der Schmelze gestoppt, so dass die Schmelze nach dem Durchfließen dieses Mischelementes 13 eine lineare Strömung aufweist.

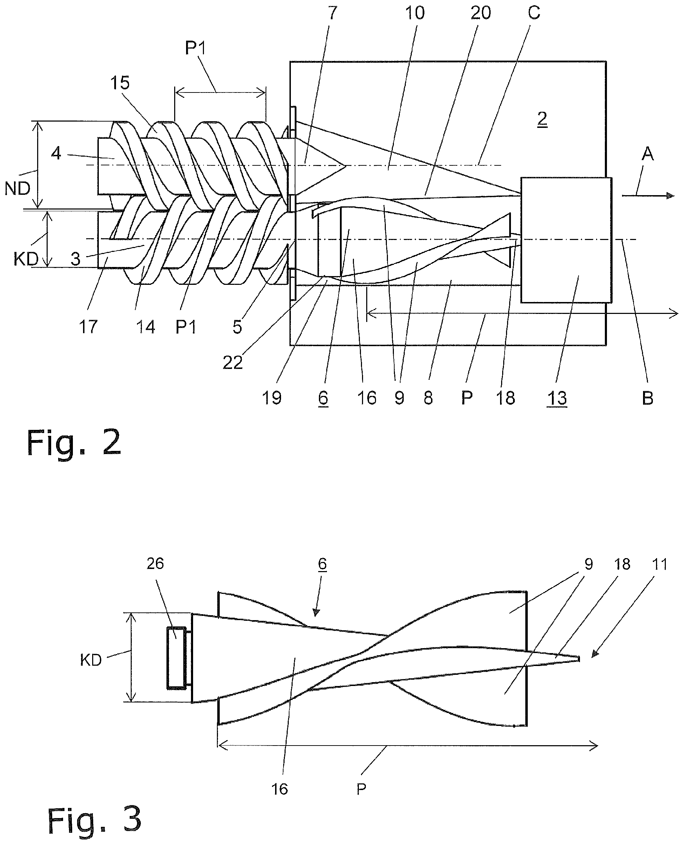

Die Fig. 2 zeigt die gleiche Situation wie Fig. 1, in Draufsicht. Die beiden Schnecken 3, 4 weisen einen entgegengesetzten Drehsinn auf, ein erster Schneckengang 14 und ein zweiter Schneckengang 15 bewegen sich auf der Oberseite auseinander. Die beiden Schnecken 3 und 4 weisen an der Schneckenspitze einen Außendurchmesser ND auf, welcher als Nenndurchmesser des Doppelschneckenextruders bezeichnet wird. Der Kerndurchmesser KD bezeichnet den Durchmesser des Schneckenkerns an der Schneckenspitze. Hier ist gut der zylindrische erste Schneckenvorraum 8 der ersten Schnecke 3 zu erkennen, in dem die Misch-Schneckenspitze 6 mit den angeformten Schneckenstegen 9 bzw. Flügeln rotiert.

Der zweiten Schnecke 4 ist ein annähernd schiefkegeliger Schneckenvorraum 10 zugeordnet. Der Schmelzestrom aus der zweiten Schnecke 4 wird schräg in den Schmelzestrom der ersten Schnecke 3 eingeleitet.

In Fig. 3 ist eine erste Ausführungsform der Misch-Schneckenspitze 6 in Draufsicht dargestellt. In der Fig. 3 links ist ein Gewinde 26 dargestellt, mit dem die Misch-Schneckenspitze 6 an die erste Schnecke 3 angeschraubt wird, so dass sie starr mit der Schnecke 3 verbunden ist. Einlaufseitig, bezogen auf die Förderrichtung A der Schmelze im Doppelschneckenextruder, schließt ein Spitzenkern 16 bündig an einen Kern 17 der ersten Schnecke 3 an, dann verjüngt sich der Spitzenkern 16 kegelförmig und läuft schließlich in einer Spitze 18 aus.

An den Spitzenkern 16 angeformt sind in dieser ersten Ausführung steil verlaufende, vergleichsweise dünne Schneckenstege 9 mit einer Ganghöhe P von etwa fünf Nenndurchmessern ND. Anstelle dieser Schneckenstege können auch axial verlaufende Flügel vorgesehen werden, welche in den Figuren jedoch nicht gezeigt werden. Diese Schneckenstege 9 bzw. Flügel erfüllen eine wichtige Aufgabe: Sie erzwingen eine Überlagerung der ursprünglich in Richtung der Längsachse B erfolgenden Strömung mit einer Rotationsbewegung, welche wesentlich für die Mischwirkung ist. Zusätzlich bewirken Schneckenstege 9 anstelle der Flügel einen Beitrag zur Längsströmung infolge ähnlicher Funktionsweise wie bei einem Einschneckenextruder. Die Anzahl der Schneckenstege 9 bzw. Flügel ist vorzugsweise ungleich der Gangzahl der Schnecken 3 und 4 in der Ausstoßzone zu wählen, also drei Mischflügel der Misch-Schneckenspitze 6 bei zweigängigen Schnecken 3, 4 und umgekehrt. Grund dafür ist das Vermeiden von regelmäßiger Überlagerung diverser Effekte.

Der erste Schneckenvorraum 8 weist einen Durchmesser d auf, welcher mit dem Nenndurchmesser ND korrespondiert. Der Außenumfang der Schneckenstege 9 bzw. Flügel füllt unter Freilassung eines kleinen Spaltes, hier etwa 1 mm, den zylindrischen ersten Schneckenvorraum 8 aus. Dieser Spalt kann wahlweise auch größer gewählt werden oder in Förderrichtung A von anfangs ca. 1 mm auf ausgangs 10 mm und mehr zunehmen. Zur Erzwingung der Rotationsströmung ist es bei der Extrusion von PVC nicht erforderlich, dass die Schneckenstege 9 bzw. Flügel besonders nahe an die Zylinderwandung des Schneckenvorraums 8 heranreichen, weil PVC-Schmelzen zum Wandgleiten neigen.

Die Förderung der Schmelze in Richtung der Längsachse B wird hauptsächlich durch die Schnecken 3, 4 bewirkt. Die Längsströmung verursacht einen gewissen Druckabfall in Förderrichtung A zur Überwindung der Reib- und Fließwiderstände. Durch die Förderwirkung der gewendelten Schneckenstege 9 aufgrund einer Ganghöhe P wird dieser Druckabfall etwas vermindert. Die erste Schnecke 3 und die zweite Schnecke 4 weisen hier eine 2-gängige Schnecken auf, deren Ganghöhe P1 kleiner ist als die Ganghöhe P. Da die Ganghöhe P deutlich größer ist als in Fig. 3 gezeichnet werden kann, ist das Maß symbolisch verkürzt eingetragen. Anstelle der gewendelten Schneckenstege 9 können auch in Achsrichtung der Längsachse B verlaufende Flügel bzw. Stege an den Spitzenkern 16 angeformt sein, dann allerdings wird die Förderung der Schmelze in Richtung der Längsachse B nicht unterstützt.

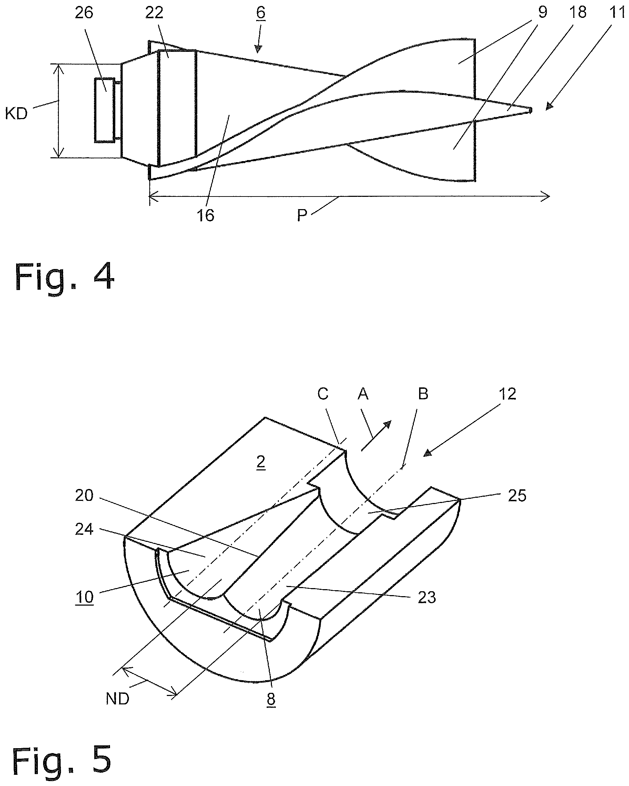

In Fig. 4 ist eine abgewandelte Ausführung der Misch-Schneckenspitze 6 nach Fig. 3 dargestellt. In diesem Fall vergrößert sich der Nenndurchmesser KD im Anschluss an die erste Schnecke 3 konisch, bleibt dann eine kurze Strecke unverändert und verjüngt sich anschließend kegelförmig, so dass der Spitzenkern 16 dann in der Spitze 18 ausläuft.

Zwischen dem verdickten Spitzenkern 16 und der Wandung des zylindrischen ersten Schneckenvorraumes 8 bildet sich eine Engstelle 19 aus, welche einen erhöhten Fließwiderstand für den ersten Schmelzestrom bewirkt. Ein Teil dieses Schmelzestromes wird daher zum zweiten Schmelzestrom abgelenkt. Nach der Engstelle 19 fließt dieser wiederum zum ersten, zylindrischen Schneckenvorraum 8 und wird dabei dem erwünschten Mischeffekt unterworfen.

In Fig. 5 ist der Misch-Adapter 2, also das Gehäuse für die beiden Schneckenvorräume 8, 10 und für die Aufnahme des statischen Mischelementes 13, in einer Schrägansicht im Halbschnitt dargestellt. Die Schnittebene ist gleichzeitig die Spiegelebene zur Ausbildung der anderen Hälfte des Mischadapters 2. Einlaufseitig ist die Innenkontur des Mischadapters 2 an eine sogenannte Brillenbohrung eines Extrusionszylinders angepasst, das sind stirnseitig zwei sich überschneidende Kreise.

Die Mischzone im Misch-Adapter 2 weist drei charakteristische Bereiche auf: Einen zylindrischen ersten Schmelzekanal 23 als Fortsetzung der ersten Schnecke 3, einen annähernd schief-kegelförmigen zweiten Schmelzekanal 24 als Fortsetzung der zweiten Schnecke 4 und eine zylindrische Ausnehmung 25 für das Mischelement 13.

Der Schneckenvorraum 8 für die erste Schnecke 3 verläuft kolinear in Achsrichtung B zylindrisch. Dies gilt für parallele und konische DSE. Jener für die zweite Schnecke 4 verjüngt sich annähernd schiefkegelig und läuft auslaufseitig schneidenförmig an einer Zylinderfläche aus. Die beiden Grundformen der Schneckenvorräume 8, 10 überschneiden sich in einem Zwickelbereich unter Bildung von Stegen 20, so dass hier ein länglicher, sich vorzugsweise konisch verjüngender Schlitz für das Hindurchströmen des zweiten Schmelzestromes frei bleibt. Die zunächst getrennt von der ersten Schnecke 3 und der zweiten Schnecke 4 ausgestoßenen Schmelzeströme vereinigen sich allmählich über die Länge dieses Schlitzes zu einem Gesamtschmelzestrom.

Im zweiten Schneckenvorraum 10 können ein oder mehrere Längsstege vorgesehen werden, welche ein Rotieren des zweiten Schmelzestromes verhindern. Ohne derartige Längsstege würde der zweite Schmelzestrom an der Kontaktstelle mit dem rotierenden ersten Schmelzestrom zu einer Rotation in entgegengesetztem Drehsinn angeregt werden. Eine reine Längsströmung des zweiten Schmelzestromes ist für den angestrebten Mischvorgang von Vorteil, weil dann nicht ähnlich wie beim Spitzen eines Bleistiftes die an der Kegeloberfläche liegenden Mantelschichten mit relativ einheitlicher Temperatur "abgehobelt" werden, sondern parabelförmige Querschnittsflächen, welche alle über den Querschnitt liegenden Temperaturbereiche beinhalten. Außerdem ist das im Sinne der Symmetrieauflösung: Es werden ein erster, rotierender Schmelzestrom und ein zweiter, nicht rotierender Schmelzestrom zu einem Gesamtschmelzestrom kombiniert.

Der Mischadapter 2 ist mittels Heizmanschetten beheizbar.

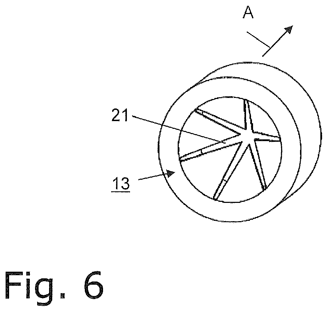

Die Fig. 6 zeigt die einlaufseitige Ansicht eines geeigneten statischen Mischelementes 13. Dieses Mischelement 13 wird in die entsprechende Öffnung des Mischgehäuses 2 eingesetzt. Nachdem der Gesamtschmelzestrom durch die dargestellten Öffnungen 21 geflossen ist, weist dieser eine reine Längsströmung auf. Das Mischelement 13 hat den Zweck, die durch die Misch-Schneckenspitze 6 erzwungene Rotation der Schmelze zu stoppen und einen zusätzlichen Mischeffekt einzubringen.

## Patentansprüche

1. Mischvorrichtung (1) für einen gegensinnig drehenden Doppelschneckenextruder zur Extrusion von PVC, mit parallel oder konisch angeordneten Schnecken, mit einer ersten Schnecke (3) und einer zweiten Schnecke (4) zum Mischen eines Schmelzstromes, mit einem ersten und einem zweiten Schneckenvorraum (8, 10), wobei der erste Schneckenvorraum (8) einen ersten Schmelzekanal (23) und der zweite Schneckenvorraum (10) einen zweiten Schmelzekanal (24) bildet, und wobei die erste Schnecke (3) eine Verlängerung in Form einer Misch-Schneckenspitze (6) aufweist, **dadurch gekennzeichnet, dass** der, eine zylindrische Form aufweisende erste Schmelzekanal (23), in den die erste Schnecke (3) hineinfördert, zu dem, eine schiefkegelige Form aufweisenden zweiten Schmelzekanal (24), in den die zweite Schnecke (4) hineinfördert, über einen länglichen, durch Überschneidung des ersten Schmelzekanals (23) mit dem zweiten Schmelzekanal (24) gebildeten Schlitz strömungsverbunden angeordnet ist, dass die erste Schnecke (3) zumindest einen Schneckensteg (9) und zumindest einen Flügel aufweist, der achsparallel oder schraubenförmig gewunden an einem Spitzenkern (16) der Misch-Schneckenspitze (6) angeordnet ist, und dass eine Ganghöhe (P) der Schneckenstege (9) größer ist als der Nenndurchmesser (ND) der ersten Schnecke (3), wobei die Ganghöhe (P) vorzugsweise doppelt bis fünfmal so groß ist wie der Nenndurchmesser (ND) und besonders bevorzugt viermal so groß ist wie der Nenndurchmesser (ND) und dass sich die Misch-Schneckenspitze (6) über eine Länge (L) in Richtung einer Längsachse (B) erstreckt, die gleich oder größer ist als der Nenndurchmesser (ND) der ersten Schnecke, die Länge (L) vorzugsweise zweimal bis zehnmal der Nenndurchmesser (ND) ist und besonders bevorzugt zweimal bis fünfmal der Nenndurchmesser (ND) ist.

2. Mischvorrichtung (1) nach Anspruch 1, **dadurch gekennzeichnet, dass** die Misch-Schneckenspitze (6) getrennt gefertigt und mit der ersten Schnecke (3) starr verbunden ist.

3. Mischvorrichtung (1) nach einem der Ansprüche 1 oder 2, **dadurch gekennzeichnet, dass** die Misch-Schneckenspitze (6) einen Spitzenkern (16) aufweist, der eingangsseitig einen gemeinsamen Kerndurchmesser (KD) mit der ersten Schnecke (3) aufweist, wobei sich der Spitzenkern (16) in Förderrichtung (A) kegelig zu einer Spitze (18) verjüngt.

4. Mischvorrichtung (1) nach einem der Ansprüche 1 bis 3, **dadurch gekennzeichnet, dass** die Misch-Schneckenspitze (6) einen Spitzenkern (16) aufweist, der eingangsseitig einen gemeinsamen Kerndurchmesser (KD) mit der ersten Schnecke (3) aufweist, wobei sich der Spitzenkern (16) in Förderrichtung (A) zuerst kegelförmig erweitert zu einer Verdickung (22) und dann kegelig zu einer Spitze (18) verjüngt.

5. Mischvorrichtung (1) nach einem der Ansprüche 1 bis 4, **dadurch gekennzeichnet, dass** in Förderrichtung (A) nach der Misch-Schneckenspitze (6) ein statisches Mischelement (13) angeordnet ist, um die erzwungene Rotation der Schmelze durch die Misch-Schneckenspitze (6) zu stoppen.

6. Verwendung eines Doppelschneckenextruders zur Herstellung von Folien, Platten oder Profilen und dergleichen, **dadurch gekennzeichnet, dass** der Doppelschneckenextruder mit einer Mischvorrichtung nach einem der Ansprüche 1 bis 5 ausgestattet ist.

## Claims

1. Mixing device (1) for a counter-rotating twin-screw extruder (1) for the extrusion of PVC, having parallel or conically arranged screws, having a first screw (3) and a second screw (4) for mixing a melt stream, having a first and a second screw antechamber (8, 10), wherein the first screw antechamber (8) has a first melt channel (23) and the second screw antechamber (10) has a second melt channel (24), and wherein the first screw (3) has an extension in the form of a mixing screw tip (6), **characterised in that** a first melt channel (23), which has a cylindrical shape and into which the first screw (3) conveys, is arranged in a flow-connected manner via an elongated slot, which is formed by overlap of the first melt channel (23) with the second melt channel (24), to a second melting channel (24), into which the second screw (4) conveys, **in that** the first screw (3) comprises at least one screw flight (9) and at least one wing which is arranged substantially paraxially or helically wound on a tip core (16) of the mixing screw tip (6), and **in that** a pitch (P) of the screw flights (9) is greater than the nominal diameter (ND) of the first screw (3), wherein the pitch (P) is preferably twice to five times as large as the nominal diameter (ND) and particularly preferably four times as large as the nominal diameter (ND), and **in that** the mixing screw tip (6) extends over a length (L) in the direction of a longitudinal axis (B) which is equal to or greater than the nominal diameter (ND) of the first screw, with the length (L) preferably being twice to ten times the nominal diameter (ND) and particularly preferably twice to five times the nominal diameter (ND).

2. Mixing device (1) according to claim 1, **characterised in that** the mixing screw tip (6) is manufactured separately and rigidly connected to the first screw (3).

3. Mixing device (1) according to one of the claims 1 or 2, **characterised in that** the mixing screw tip (6) has a tip core (16) which on the inlet side has a common core diameter (KD) with the first screw (3), wherein the tip core (16) tapers conically to a tip (18) in the conveying direction (A).

4. Mixing device (1) according to one of the claims 1 to 3, **characterised in that** the mixing screw tip (6) has a tip core (16) which on the inlet side has a common core diameter (KD) with the first screw (3), wherein the tip core (16) conically widens at first in the conveying direction (A) to a thickened portion (22) and then tapers conically to a tip (18).

5. Mixing device (1) according to one of the claims 1 to 4, **characterised in that** in the conveying direction (A) after the mixing screw tip (6), a static mixing element (13) is arranged to stop the forced rotation of the melt through the mixing screw tip (6).

6. Use of a twin-screw extruder for the production of films, plates or profiles and the like, **characterised in that** the twin-screw extruder is equipped with a mixing device according to one of claims 1 to 5.

## Revendications

1. dispositif mélangeur (1) pour une extrudeuse bi-vis à sens de rotation opposés pour l'extrusion de PVC comprenant des vis installées selon une disposition parallèle ou conique, une première vis (3) et une seconde vis (4) pour mélanger une masse fondue, et une première et une seconde préchambre de vis (8, 10),
* la première préchambre de vis (8) formant un premier canal de fusion (23) et la seconde préchambre de vis (10) formant un second canal de fusion (24) et
* la première vis (3) a un prolongement en forme de pointe de vis mélangeuse (6),
dispositif mélangeur **caractérisé en ce que**
- le premier canal de fusion (23) de forme cylindrique, alimenté par la première vis (3) communique par une fente allongée formée par l'intersection du premier canal de fusion (23) et du second canal de fusion (24) ayant une forme conique inclinée, alimentée par la seconde vis (4),
- la première vis (3) comporte au moins un filet de vis (9) ou ailette parallèle à l'axe ou en hélice autour du cœur (16) de la pointe de vis mélangeuse (6), et
- le pas de vis (P) du filet de vis (9) est supérieur au diamètre nominal (ND) de la première vis (3),
* le pas de vis (P) étant de préférence égal au double jusqu'à cinq fois le diamètre nominal (ND) et d'une manière particulièrement préférentielle, quatre fois le diamètre nominal (ND) et
- la pointe de vis mélangeuse (6) s'étend sur une longueur (L) dans la direction de l'axe longitudinal (B), cette longueur étant égale ou supérieure au diamètre nominal (ND) de la première vis, la longueur (L) étant, de préférence égale à deux jusqu'à dix fois le diamètre nominal (ND) et d'une manière particulièrement préférentielle, deux à cinq fois le diamètre nominal (ND).

2. Dispositif mélangeur (1) selon la revendication 1,
**caractérisé en ce que**
la pointe de vis mélangeuse (6) fabriquée séparément est reliée rigidement à la première vis (3).

3. Dispositif mélangeur (1) selon l'une des revendications 1 ou 2,
**caractérisé en ce que**
la pointe de vis mélangeuse (6) a un cœur de pointe (16) qui, côté entrant, a un diamètre de cœur (KD) commun avec la première vis (3),
le cœur de pointe (16) allant en diminuant dans la direction de transport (A), suivant une forme conique, jusqu'à une pointe (18).

4. Dispositif mélangeur (1) selon l'une des revendications 1 à 3,
**caractérisé en ce que**
la pointe de vis mélangeuse (6) a un cœur de pointe (16) qui, côté entrée, a un diamètre de cœur (KD) commun avec la première vis (3) et
* le cœur de pointe (16) s'élargit tout d'abord suivant une forme conique dans la direction de transport (A) jusqu'à un renforcement (22) puis diminue suivant une forme conique jusqu'à une pointe (18).

5. Dispositif mélangeur (1) selon l'une des revendications 1 à 4,
**caractérisé en ce que**
dans la direction de transport (A), en aval de la pointe de vis mélangeuse (6) il y a un élément mélangeur (13) statique, pour bloquer la rotation forcée de la masse fondue par la pointe de vis mélangeuse (6).

6. Application d'une extrudeuse bi-vis pour la fabrication de films, de plaques ou de profilés ou d'éléments analogues,
**caractérisée en ce que**
l'extrudeuse à bi-vis est équipée d'un dispositif mélangeur selon l'une des revendications 1 à 5.
